# EUROPEAN PATENT SPECIFICATION

(11) **EP 4 039 568 B1**
(45) Date of publication and mention of the grant of the patent: **22.03.2023**
(21) Application number: 21202441.8
(22) Date of filing: 13.10.2021
(51) Int. Cl.: B62J 6/027, B62J 6/026, B62J 17/02, B60Q 1/04, F21S 41/255, F21S 41/50, F21W 102/13, F21W 107/17

(54) **STRADDLED VEHICLE AND FABRICATING METHOD THEREOF**
GRÄTSCHSITZFAHRZEUG UND HERSTELLUNSVERFAHREN DAFÜR
VÉHICULE À ENFOURCHER ET MÉTHODE DE FABRICATION ASSOCIÉE

(30) Priority: 08.02.2021 JP 2021018444
(43) Date of publication of application: 10.08.2022
(73) Proprietor: Yamaha Hatsudoki Kabushiki Kaisha, Iwata-shi, Shizuoka-ken 438-8501 (JP)
(72) Inventor: HATANO, Soichiro, Iwata-shi, 438-8501 (JP); KUROSU, Hirotoshi, Iwata-shi, 438-8501 (JP)
(74) Representative: Di Sciuva, Michele

(56) References cited:
- JP-A- H06 219 207
- JP-A- H07 246 971
- JP-A- 2005 324 703
- US-A1- 2014 063 826

## Description

### TECHNICAL FIELD

The present teaching relates to a straddled vehicle including a headlight disposed at the center in a vehicle width direction.

### BACKGROUND

A straddled vehicle known to date includes a front cover, and a headlight attached to the front cover. In another type of a straddled vehicle known to date, an opening is formed in the center of a front cover in the vehicle width direction. JP2016-5942A discloses a motorcycle including a front cover having an intake opening in a center portion thereof, a left headlight disposed at the left of the intake opening, and a right headlight disposed at the right of the intake opening. The intake opening is connected to an air cleaner through a duct.
JP H07 246971 A discloses a straddled vehicle according to the preamble of independent claim 1 and constitutes the closest prior art to the subject-matter of independent method claim 9. JP H07 246971 A discloses a cowling device for a motorcycle where a cowling brace is fixed to a car body front head part, a cowling body to cover the car body front head part is installed on the cowling brace, a bead part has a thickness greater than a thickness of the whole cowling body, a roundish cross-sectional shape is formed on the inner peripheral edge of a handle operating bay inside part arranged on the cowling body, and a hollow part is formed in the lengthwise direction inside of the bead part.

### SUMMARY OF INVENTION

### TECHNICAL PROBLEM

In attaching a headlight to a front cover, the position of a headlight is shifted in the left-right direction in some cases. This shift, however, is not conspicuous in a straddled vehicle in which the headlight is not disposed at the center in the vehicle width direction. In a straddled vehicle including a left headlight and a right headlight, even when the position of each headlight is shifted in the left-right direction, this shift is not conspicuous.

In a case where the opening at the center of the front cover is an intake opening, a vehicle part connected to the opening is a duct. In the case where the opening is the intake opening, even when the position of the vehicle part is shifted in the left-right direction, this shift is not conspicuous.

On the other hand, in a case where a headlight is disposed in an opening at the center of a front cover, when the position of the headlight is shifted in the left-right direction, this shift is conspicuous.

It is therefore an object of the present teaching to provide a straddled vehicle including a front cover having an opening at the center in the vehicle width direction, and a headlight disposed in the opening of the front cover while easily preventing or reducing leftward and rightward positional shifts of the headlight with respect to the front cover.

### SOLUTION TO PROBLEM

A straddled vehicle disclosed here includes a front cover having a center hole at a center of the front cover in a vehicle width direction, the center hole extending rearward; a headlight unit including a headlight disposed inside the center hole; and a stay fixed to the front cover. The headlight unit has a first attachment hole, a second attachment hole, and a third attachment hole. The stay has a first stay hole, a second stay hole, and a third stay hole. At least one of the first attachment hole and the first stay hole is an elongated hole elongated in a left-right direction. At least one of the second attachment hole and the second stay hole is an elongated hole elongated in the left-right direction. At least one of the third attachment hole and the third stay hole is an elongated hole elongated in the left-right direction. The straddled vehicle includes a first bolt inserted in the first attachment hole and the first stay hole and fastening the headlight unit and the stay to each other, a second bolt inserted in the second attachment hole and the second stay hole and fastening the headlight unit and the stay to each other, and a third bolt inserted in the third attachment hole and the third stay hole and fastening the headlight unit and the stay to each other. The front cover includes a left wall and a right wall, the left wall defining a portion of the center hole, the right wall defining a portion of the center hole and located at the right of the left wall. The headlight unit includes a left contact surface and a right contact surface, the left contact surface being separated rightward form the left wall and facing the left wall, the right contact surface being separated leftward from the right wall and facing the right wall.

In the straddled vehicle, the use of a jig including the left insertion portion configured to be inserted between the left wall of the center hole and the left contact surface of the headlight unit and the right insertion portion configured to be inserted between the right wall of the center hole and the right contact surface of the headlight unit can easily eliminate or reduce a positional shift of the headlight in the left-right direction. For example, first, the first bolt is inserted in the first attachment hole and the first stay hole, and then the second bolt is inserted in the second attachment hole and the second stay hole. Then, the jig is inserted in the center hole from the front, the left insertion portion is pushed against the left wall and the left contact surface, and the right insertion portion is pushed against the right wall and the right contact surface. In this manner, positioning of the headlight unit with respect to the front cover in the left-right direction is performed. The headlight is located at the center in the vehicle width direction. Lastly, the headlight unit is fixed to the stay with at least the third bolt. In the manner described above, a positional shift of the headlight with respect to the front cover in the left-right direction can be easily prevented or reduced.

The left wall may extend rearward and rightward. The left contact surface may extend rearward and leftward. The right wall may extend rearward and leftward. The right contact surface may extend rearward and rightward.

With this configuration, the distance between the left wall and the left contact surface in the left-right direction and the distance between the right wall and the right contact surface in the left-right direction gradually increase toward the front. Accordingly, the jig can be easily inserted. Positioning of the headlight to the front cover in the left-right direction can be easily performed. As a result, a positional shift of the headlight in the left-right direction can be easily prevented or reduced.

The headlight unit may include a left side cover and a right side cover, the left side cover being at least partially disposed at the left of the headlight, the right side cover being disposed at the right of the headlight. The left contact surface may be provided in the left side cover, and the right contact surface is provided in the right side cover.

With this configuration, positioning of the headlight unit can be performed in the left-right direction without contact of the jig with the headlight.

A front end of the left side cover and a front end of the right side cover may be located forward of a front end of the headlight.

With this configuration, in inserting the jig in the center hole from the front, the left insertion portion can be quickly inserted between the left wall of the front cover and the left contact surface of the left side cover, and the right insertion portion can be quickly inserted between the right wall of the front cover and the right contact surface of the right side cover. Accordingly, the jig can be easily inserted. Positioning of the headlight to the front cover in the left-right direction can be easily performed. As a result, a positional shift of the headlight in the left-right direction can be easily prevented or reduced.

The center hole may have a symmetric shape in a left-right direction in a vehicle front view.

When the position of the headlight is shifted in the left-right direction, the symmetric shape of the center hole in the left-right direction facilitates the positional shift. In the straddled vehicle, however, since the positional shift of the headlight in the left-right direction can be prevented or reduced, and thus, the symmetric shape described above of the center hole does not cause any problem.

The center hole may have an upper edge. The upper edge may include a left upper edge and a right upper edge, the left upper edge extending leftward and upward from a center position in a vehicle width direction in a vehicle front view, the right upper edge extending rightward and upward from the center position in the vehicle width direction in the vehicle front view.

The center hole has a shape with which the center position in the vehicle width direction is noticeable. Accordingly, when the position of the headlight is shifted in the left-right direction, this shift is conspicuous. In the straddled vehicle, however, since the positional shift of the headlight in the left-right direction can be prevented or reduced, and thus, the symmetric shape described above of the center hole does not cause any problem.

The first stay hole may be located at the right of and above the third stay hole. The second stay hole may be located at the left of and above the third stay hole.

With this configuration, the stay can support the headlight unit with stability.

The first stay hole and the second stay hole may be open rearward. The third stay hole may be open downward.

With this configuration, the first bolt and the second bolt can be fastened from the rear. Although the third stay hole is disposed relatively in a lower portion, the third bolt is allowed to be inserted in the third stay hole from below and fastened. In fastening the first through third bolts, a tool path can be easily obtained. Accordingly, after positioning of the headlight unit in the left-right direction is performed, the first through third bolts can be easily fastened.

A method for fabricating the straddled vehicle disclosed here includes the step of inserting the first bolt in the first attachment hole and the first stay hole, and inserting the second bolt in the second attachment hole and the second stay hole. The fabrication method includes the step of inserting the first bolt in the first attachment hole and the first stay hole, and inserting the second bolt in the second attachment hole and the second stay hole. The fabrication method includes the step of placing a jig ahead of the center hole of the front cover, the jig including a left insertion portion and a right insertion portion, the left insertion portion being configured to be inserted between the left wall and the left contact surface, the right insertion portion being configured to be inserted between the right wall and the right contact surface. The fabrication method includes the step of inserting the jig in the center hole, pushing the left insertion portion against the left wall and the left contact surface, and pushing the right insertion portion against the right wall and the right contact surface, thereby positioning the headlight unit with respect to the front cover in a left-right direction. The fabrication method includes the step of fixing the headlight unit to the stay with at least the third bolt.

### ADVANTAGES OF INVENTION

The present teaching can provide a straddled vehicle including a front cover having an opening at the center in the vehicle width direction, and a headlight disposed in the opening of the front cover while easily preventing or reducing leftward and rightward positional shifts of the headlight with respect to the front cover.

### BRIEF DESCRIPTION OF THE DRAWINGS

FIG. 1 is a left side view of a motorcycle according to a preferred embodiment.
FIG. 2 is a front view of the motorcycle.
FIG. 3 is a left side view of a front portion.
FIG. 4 is a rear view of the front portion.
FIG. 5 is a left side view of a stay and a headlight unit.
FIG. 6 is a cross-sectional view taken along line VI-VI in FIG. 3.
FIG. 7 is an enlarged front view of, for example, a center hole of the front portion and a headlight.
FIG. 8 is a rear view of the headlight unit.
FIG. 9 is a bottom view of the headlight unit.
FIG. 10 is a rear view of the stay.
FIG. 11 is a bottom view of the stay.
FIG. 12 is a rear view of the stay and the headlight unit.
FIG. 13 is a bottom view of the stay and the headlight unit.
FIG. 14 is a flowchart of a method for assembling the headlight unit and the stay.
FIG. 15 is a flowchart of another method for assembling the headlight unit and the stay.

### DETAILED DESCRIPTION

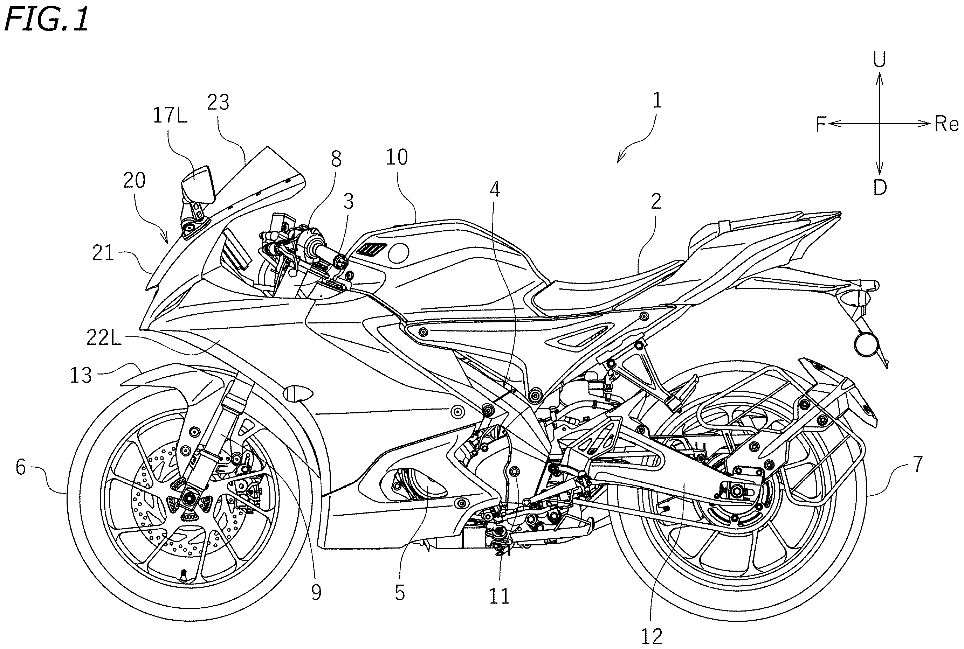

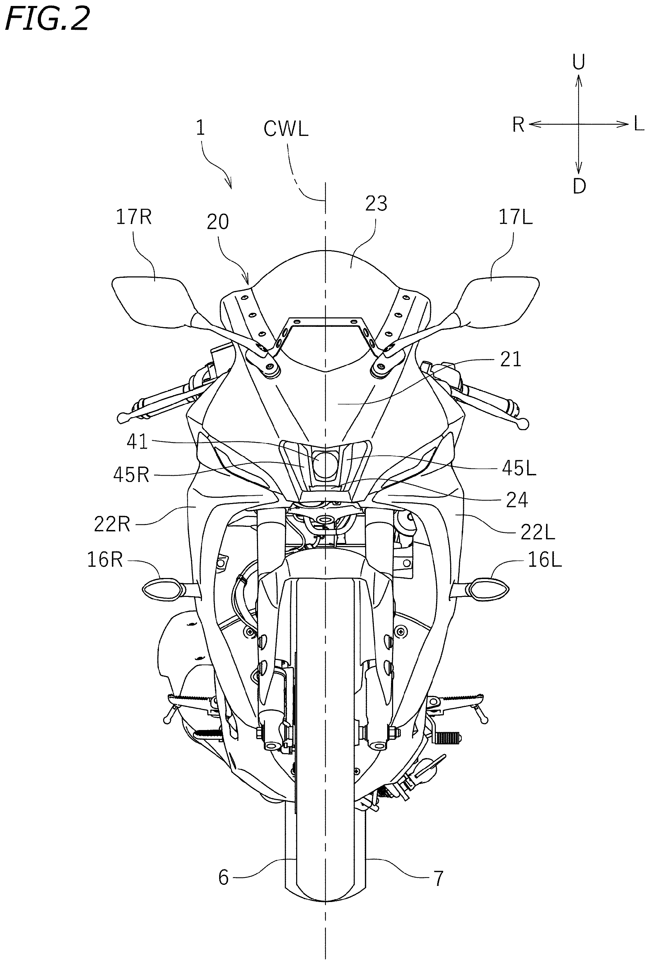

One preferred embodiment will be described hereinafter with reference to the drawings . FIG. 1 is a left side view of a motorcycle 1 as an example of a straddled vehicle. FIG. 2 is a front view of the motorcycle 1.

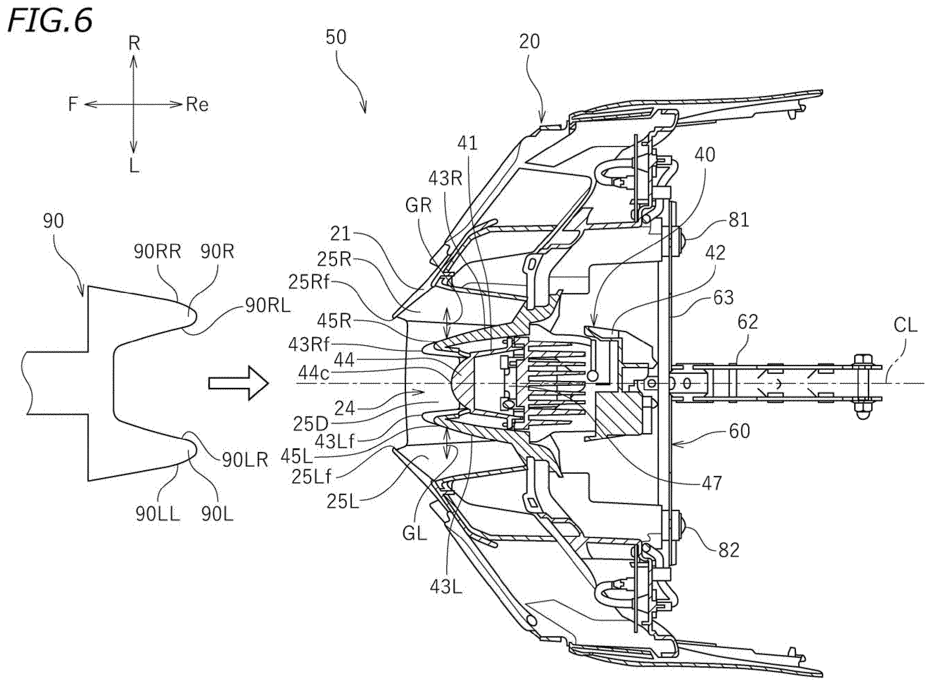

Unless otherwise specified, front, rear, left, right, up, and down as used in the description below refer to front, rear, left, right, up, and down, respectively, as seen from an imaginary passenger seated on a seat 2 in a case where the motorcycle 1 on which no passengers are seated and no load is mounted is stationary in an upright position on a horizontal plane. The reference characters F, Re, L, R, U, and D in the drawings represent front, rear, left, right, up, and down, respectively. Forward includes not only a direction extending forward along a vehicle center line CL (see FIG. 6) but also a direction tilted from the forward direction at an angle less than 90 degrees, in a vehicle plan view. Similarly, rearward includes not only a direction extending rearward along the vehicle center line CL but also a direction tilted from the rearward direction at an angle less than 90 degrees, in a vehicle plan view. Leftward includes not only a direction extending leftward and perpendicularly to the vehicle center line CL but also a direction tilted from the leftward direction at an angle less than 90 degrees, in a vehicle plan view. Rightward includes not only a direction extending rightward and perpendicularly to the vehicle center line CL but also a direction tilted from the right direction at an angle less than 90 degrees, in a vehicle plan view. Upward includes not only a vertically upward direction but also a direction tilted from the upward direction at an angle less than 90 degrees, in a vehicle side view. Downward includes not only a vertically downward direction but also a direction tilted from the downward direction at an angle less than 90 degrees, in a vehicle side view.

As illustrated in FIG. 1, the motorcycle 1 includes a vehicle body frame 4 including a head pipe 3, an internal combustion engine 5 supported by the vehicle body frame 4, the seat 2 supported by the vehicle body frame 4, a front wheel 6, and a rear wheel 7. An unillustrated steering shaft is inserted in the head pipe 3. A handlebar 8 is fixed to an upper portion of the steering shaft. A front fork 9 is fixed to a lower portion of the steering shaft. The front wheel 6 is supported by the front fork 9. The front fork 9 supports a front fender 13. A fuel tank 10 is disposed ahead of the seat 2. A pivot shaft 11 is fixed to the vehicle body frame 4. A front end of a rear arm 12 is swingably coupled to the pivot shaft 11. The rear wheel 7 is supported by a rear end of the rear arm 12.

The motorcycle 1 includes a front cover 20. At least a part of the front cover 20 is disposed ahead of the head pipe 3. In this preferred embodiment, the front cover 20 includes a front cowl 21, a left side cowl 22L, a right side cowl 22R (see FIG. 2), and a wind shield 23. The front cowl 21 is disposed ahead of the head pipe 3. The front cowl 21, the left side cowl 22L, the right side cowl 22R, and the wind shield 23 are formed as separate components. The present teaching is, however, not limited to this example. Two or more of the front cowl 21, the left side cowl 22L, the right side cowl 22R, and the wind shield 23 may be formed as one part.

In FIG. 2, a line CWL is a vertical line passing through the center in the vehicle width direction. The line CWL will be hereinafter also referred to as a center line CWL. The center line CWL passes through the centers in the vehicle width direction of the front wheel 6 and the rear wheel 7. The center line CWL is a vertical line perpendicular to a center line CL (see FIG. 6) . As illustrated in FIG. 2, the front cowl 21 has a center hole 24. The center hole 24 extends rearward. The center hole 24 is open forward and rearward. In a vehicle front view, the center line CWL intersects with the center hole 24. In the vehicle front view, a headlight 41 is disposed inside the center hole 24.

A left flasher 16L is attached to the left side cowl 22L. A right flasher 16R is attached to the right side cowl 22R. The left flasher 16L is disposed at the left of and below the center hole 24. The right flasher 16R is disposed at the right of and below the center hole 24.

A left side mirror 17L is attached to a portion of the front cowl 21 at the left of the center line CWL and above the center hole 24. A right side mirror 17R is attached to a portion of the front cowl 21 at the right of the center line CWL and above the center hole 24.

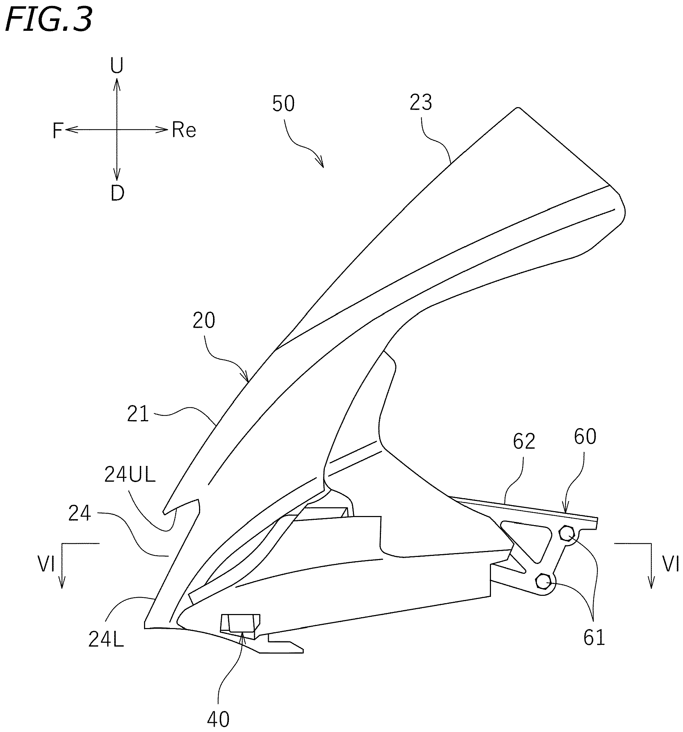

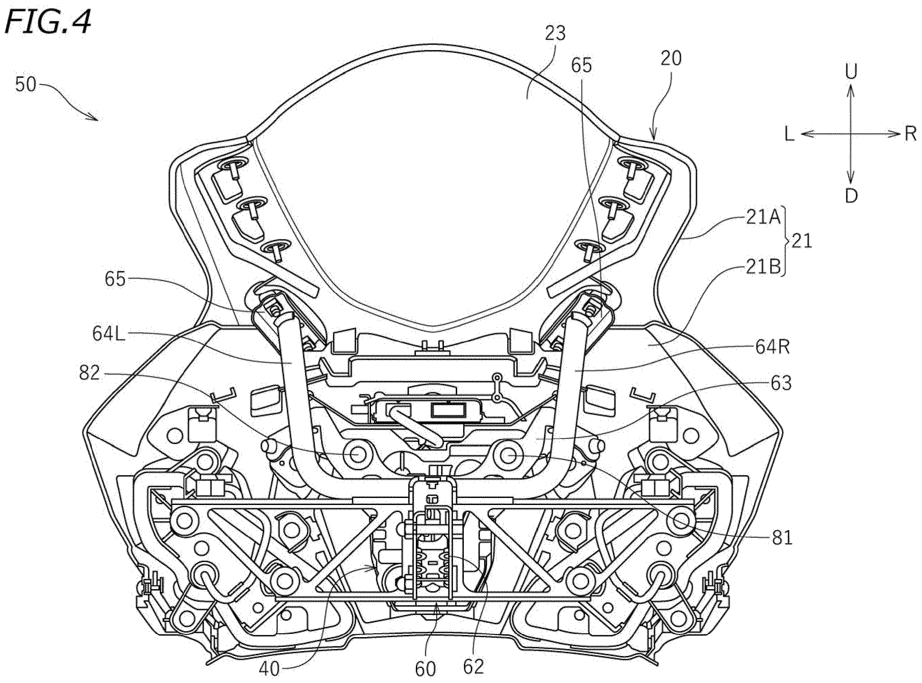

FIG. 3 is a left side view of a portion (hereinafter referred to as a front portion) 50 of the motorcycle 1. FIG. 4 is a rear view of the front portion 50. As illustrated in FIG. 4, the front portion 50 includes the front cowl 21, the wind shield 23, a stay 60, and a headlight unit 40 including the headlight 41. In this preferred embodiment, the front cowl 21 includes a first part 21A, and a second part 21B assembled in the first part 21A. Alternatively, the first part 21A and the second part 21B may be an integrated part. The front cowl 21 may be formed by assembling a plurality of parts, or may be a single part.

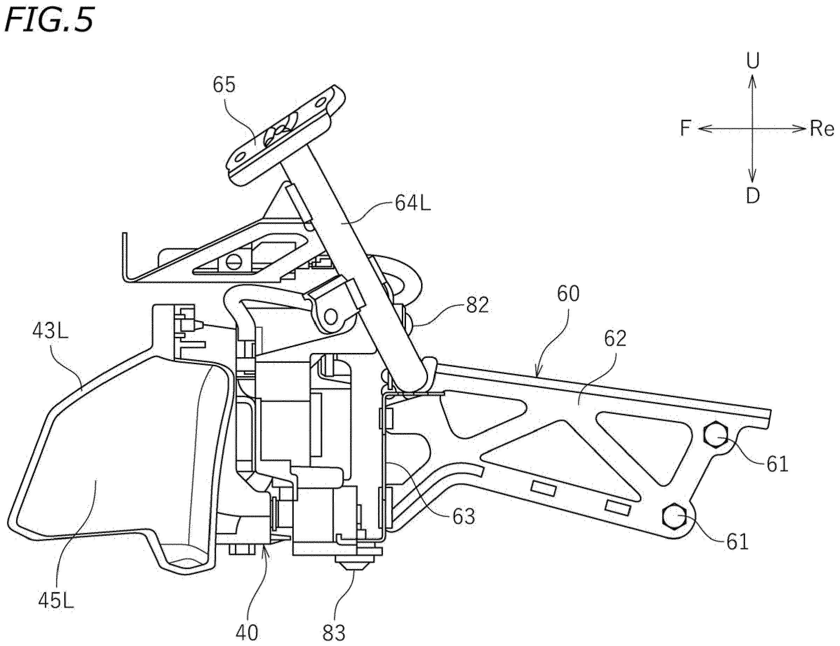

As illustrated in FIG. 4, the front cowl 21 is fixed to the stay 60. As illustrated in FIG. 5, the headlight unit 40 is fixed to the stay 60. The stay 60 supports at least a part of the front cover 20 and the headlight unit 40. The stay 60 includes a longitudinal frame 62 extending forward and a lateral frame 63 extending leftward and rightward. As illustrated in FIG. 4, the stay 60 includes a left arm 64L and a right arm 64R. Although not shown, the rear end of the longitudinal frame 62 is fixed to the head pipe 3 (see FIG. 1) with a bolt 61. The lateral frame 63 is fixed to the front end of the longitudinal frame 62. The left arm 64L and the right arm 64R are fixed to the front end of the longitudinal frame 62.

As illustrated in FIG. 4, brackets 65 are fixed to the upper ends of the left arm 64L and the right arm 64R. The front cowl 21 is attached to the brackets 65.

FIG. 6 is a horizontal cross-sectional view of the front portion 50, and is a cross-sectional view taken along line VI-VI in FIG. 3. As illustrated in FIG. 6, the headlight unit 40 includes the headlight 41, a case 42, a left side cover 43L at least partially disposed at the left of the headlight 41, and a right side cover 43R at least partially disposed at the right of the headlight 41.

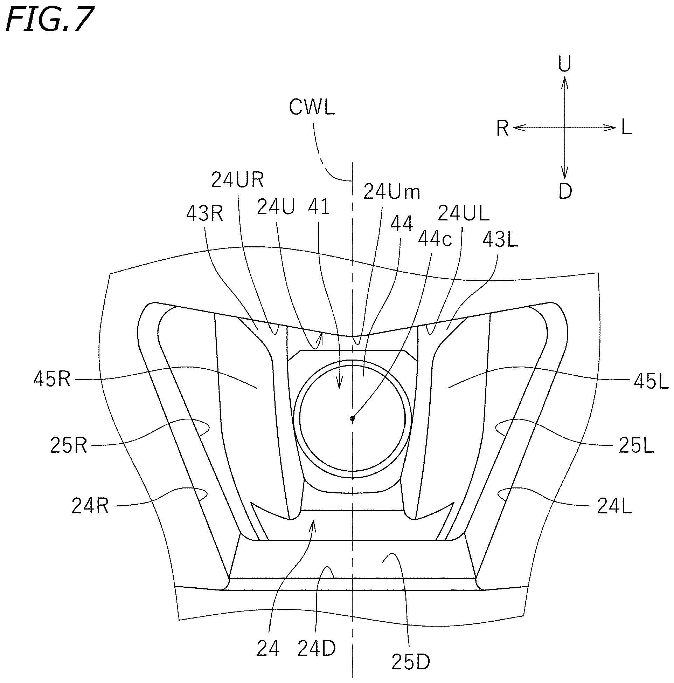

The headlight 41 includes a light source 47, and a lens 44 disposed ahead of the light source 47. The lens 44 projects forward. In this preferred embodiment, the lens 44 is hemisphere. A center 44c (see FIG. 7) of the lens 44 in a vehicle front view is located on the vehicle center line CL. The center 44c of the lens 44 is the front end of the headlight 41. The shape of the lens 44 described above is an example. The shape of the lens 44 is not specifically limited.

The left side cover 43L is disposed at the left of the vehicle center line CL. The left side cover 43L is disposed at the left of at least a portion of the headlight 41. The left side cover 43L is disposed at the left of at least a portion of the lens 44. The left side cover 43L has a left contact surface 45L that can contact a left insertion portion 90L of a jig 90 described later. The left contact surface 45L extends upward. The left contact surface 45L extends rearward and leftward. A front end 43Lf of the left side cover 43L is located forward of the front end 44c of the headlight 41. The front end of the left contact surface 45L is located forward of the front end 44c of the headlight 41.

The right side cover 43R is symmetrically disposed with the left side cover 43L in the left-right direction. The right side cover 43R is located at the right of the vehicle center line CL. The right side cover 43R is disposed at the right of at least a portion of the headlight 41. The right side cover 43R is disposed at the right of at least a portion of the lens 44. The right side cover 43R has a right contact surface 45R that can contact a right insertion portion 90R of the jig 90. The right contact surface 45R extends upward. The right contact surface 45R extends rearward and rightward. A front end 43Rf of the right side cover 43R is located forward of the front end 44c of the headlight 41. The front end of the right contact surface 45R is located forward of the front end 44c of the headlight 41.

FIG. 7 is an enlarged front view of, for example, the center hole 24 of the front portion 50 and the headlight 41. The center hole 24 includes an upper edge 24U, a lower edge 24D, a left edge 24L, and a right edge 24R. The center hole 24 has a symmetric shape with respect to the center line CWL in the left-right direction in a vehicle front view. The upper edge 24U has a left upper edge 24UL extending leftward and upward from a center position 24Um in the vehicle width direction in a vehicle front view, and a right upper edge 24UR extending rightward and upward from the center position 24Um in the vehicle front view. The upper edge 24U has a V shape in the vehicle front view. The lower edge 24D extends leftward and rightward in the vehicle front view. The left edge 24L extends leftward and upward from the left end of the lower edge 24D to the left end of the left upper edge 24UL in the vehicle front view. The right edge 24R extends rightward and upward from the right end of the lower edge 24D to the right upper edge 24UR in the vehicle front view.

As illustrated in FIG. 6, the center hole 24 extends rearward. The front cowl 21 has a left wall 25L, a right wall 25R, a lower wall 25D, and an upper wall (not shown) each of which defines a portion of the center hole 24. The left wall 25L extends rearward and rightward. The right wall 25R extends rearward and leftward. A front end 25Lf of the left wall 25L and a front end 25Rf of the right wall 25R are located forward of the front end 43Lf of the left side cover 43L and the front end 43Rf of the right side cover 43R.

As illustrated in FIG. 6, the left contact surface 45L is separated rightward from the left wall 25L. The left contact surface 45L faces the left wall 25L. The right contact surface 45R is separated leftward from the right wall 25R. The right contact surface 45R faces the right wall 25R. A gap GL is formed between the left contact surface 45L and the left wall 25L. A gap GR is formed between the right contact surface 45R and the right wall 25R. The lateral length of each of the gap GL ad the gap GR decreases toward the rear.

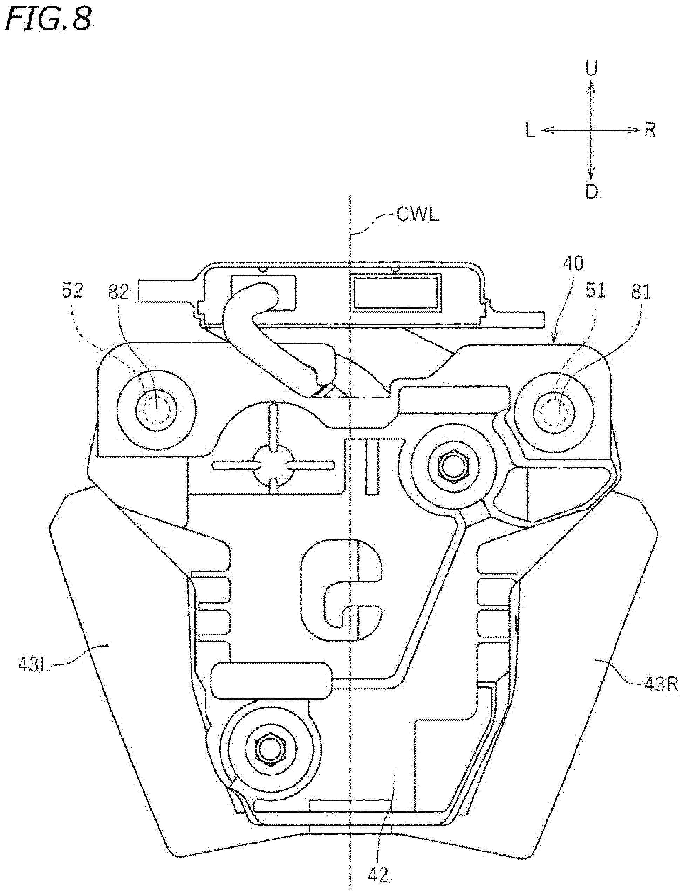

FIG. 8 is a rear view of the headlight unit 40. A rear portion of the case 42 of the headlight unit 40 has a first attachment hole 51 in which a first bolt 81 is inserted and a second attachment hole 52 in which a second bolt 82 is inserted. The first attachment hole 51 is formed at the right of the center line CWL. The second attachment hole 52 is formed at the left of the center line CWL. The first attachment hole 51 and the second attachment hole 52 are open rearward. Each of the first attachment hole 51 and the second attachment hole 52 has a circular hole having a uniform inner diameter.

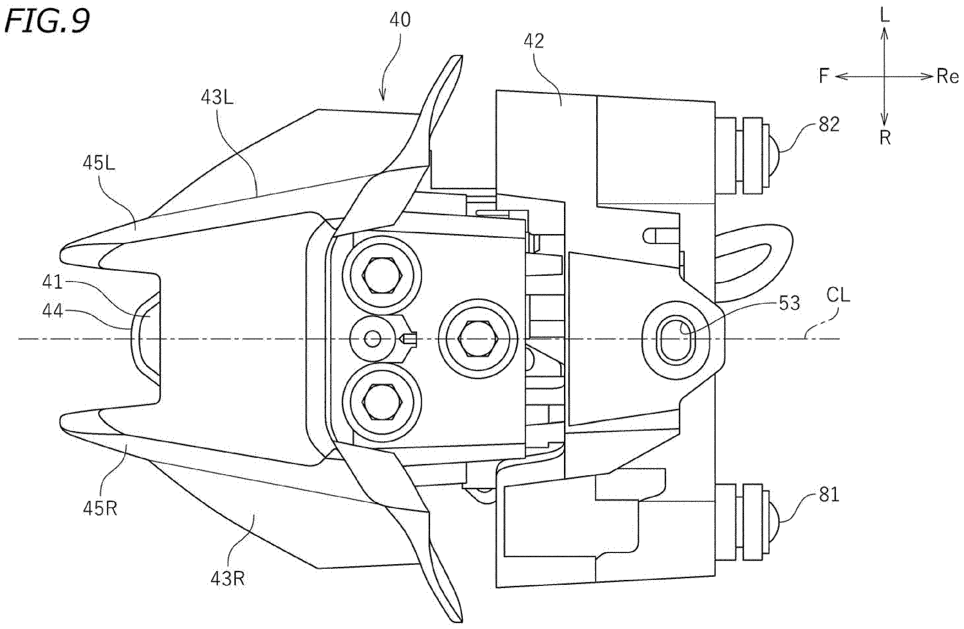

FIG. 9 is a bottom view of the headlight unit 40. A bottom portion of the case 42 of the headlight unit 40 has a third attachment hole 53. The third attachment hole 53 intersects with the vehicle center line CL. The third attachment hole 53 is open downward. The third attachment hole 53 is an elongated hole that is elongated in the left-right direction. That is, the third attachment hole 53 is an elongated hole whose dimension in the left-right direction is larger than the dimension in the front-rear direction.

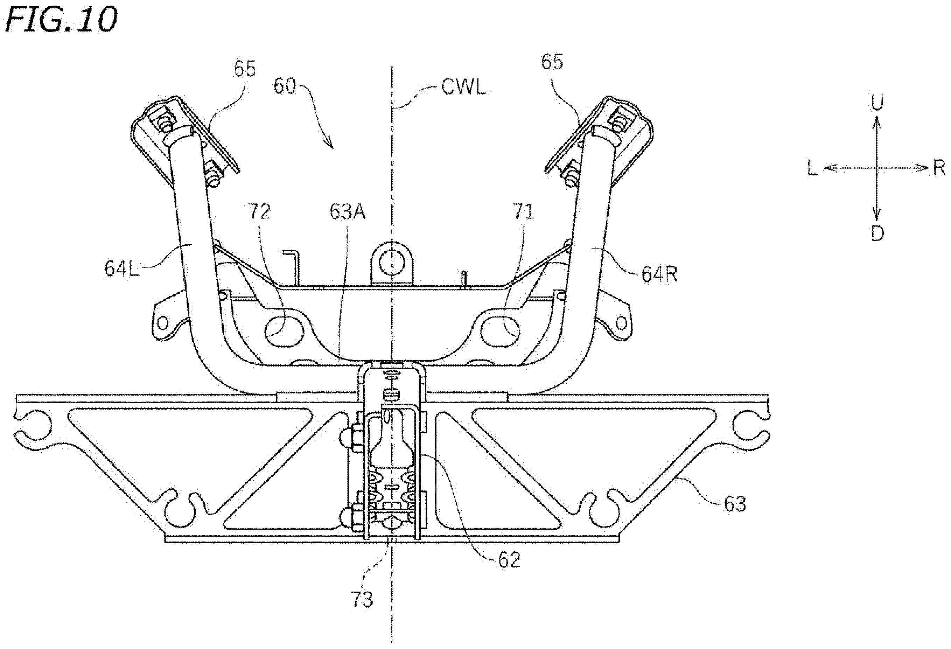

FIG. 10 is a rear view of the stay 60. The lateral frame 63 of the stay 60 includes a plate portion 63A extending in the left-right direction and the up-down direction. The plate portion 63A has a first stay hole 71 and a second stay hole 72. The first stay hole 71 is formed at the right of the center line CWL. The second stay hole 72 is formed at the left of the center line CWL. Each of the first stay hole 71 and the second stay hole 72 is an elongated hole elongated in the left-right direction. That is, each of the first stay hole 71 and the second stay hole 72 is an elongated hole whose dimension in the left-right direction is larger than the dimension in the up-down direction. The first stay hole 71 and the second stay hole 72 penetrate the plate portion 63A in the front-rear direction. Each of the first stay hole 71 and the second stay hole 72 is open forward and rearward.

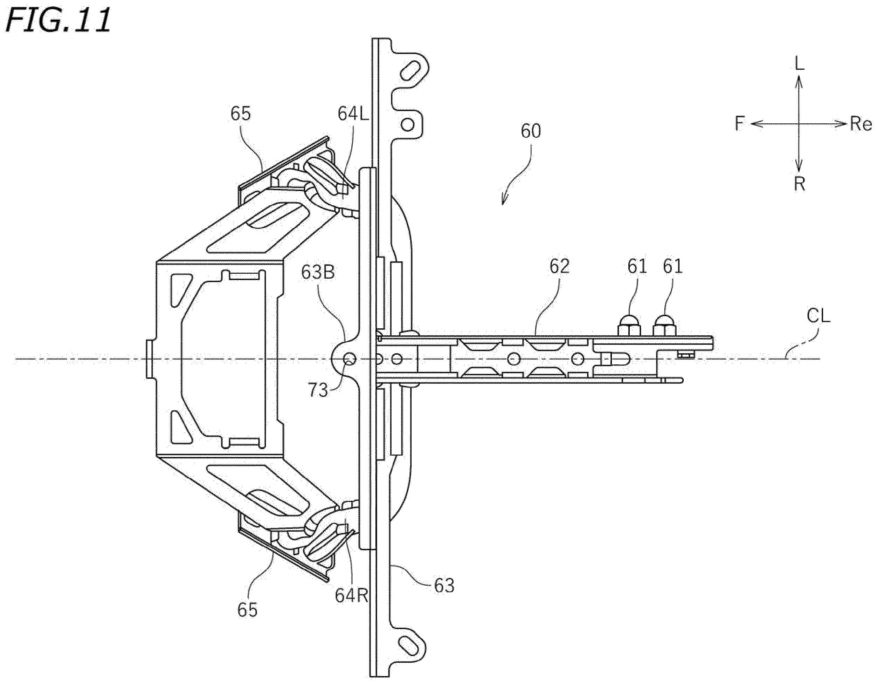

FIG. 11 is a bottom view of the stay 60. The lateral frame 63 includes a plate portion 63B extending in the left-right direction and the front-rear direction. The plate portion 63B has a third stay hole 73. The third stay hole 73 overlaps with the vehicle center line CL. The third stay hole 73 is a circular hole having a uniform diameter. The third stay hole 73 penetrates the plate portion 63B in the up-down direction. The third stay hole 73 is open upward and downward.

As illustrated in FIG. 10, the first stay hole 71 is located at the right of and above the third stay hole 73. The second stay hole 72 is located at the left of and above the third stay hole 73.

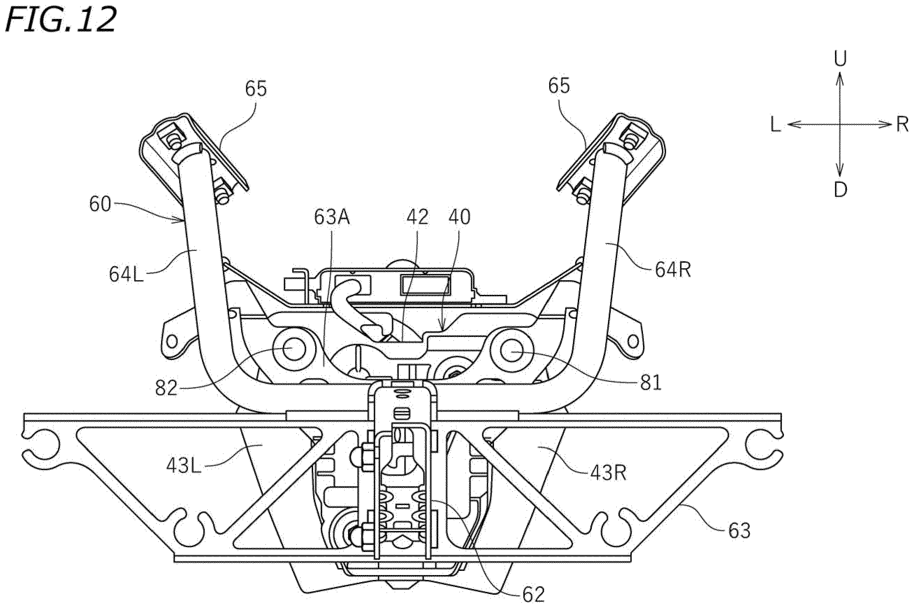

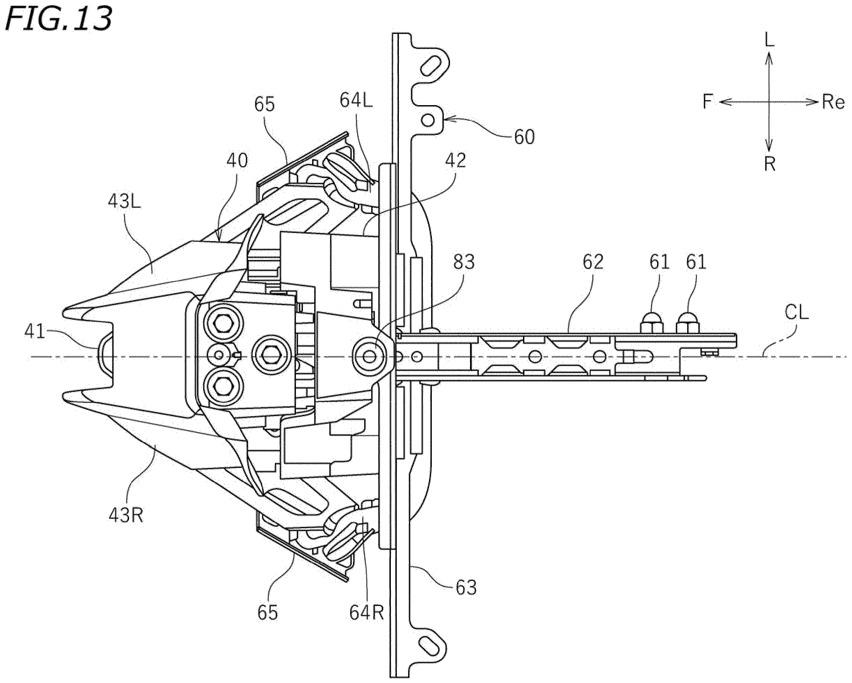

As illustrated in FIG. 12, the first bolt 81 is inserted in the first stay hole 71 and the first attachment hole 51. The second bolt 82 is inserted in the second stay hole 72 and the second attachment hole 52. The headlight unit 40 and the stay 60 are coupled to each other with the first bolt 81 and the second bolt 82. As illustrated in FIG. 13, the third bolt 83 is inserted in the third stay hole 73 and the third attachment hole 53. The headlight unit 40 and the stay 60 are assembled together with the third bolt 83.

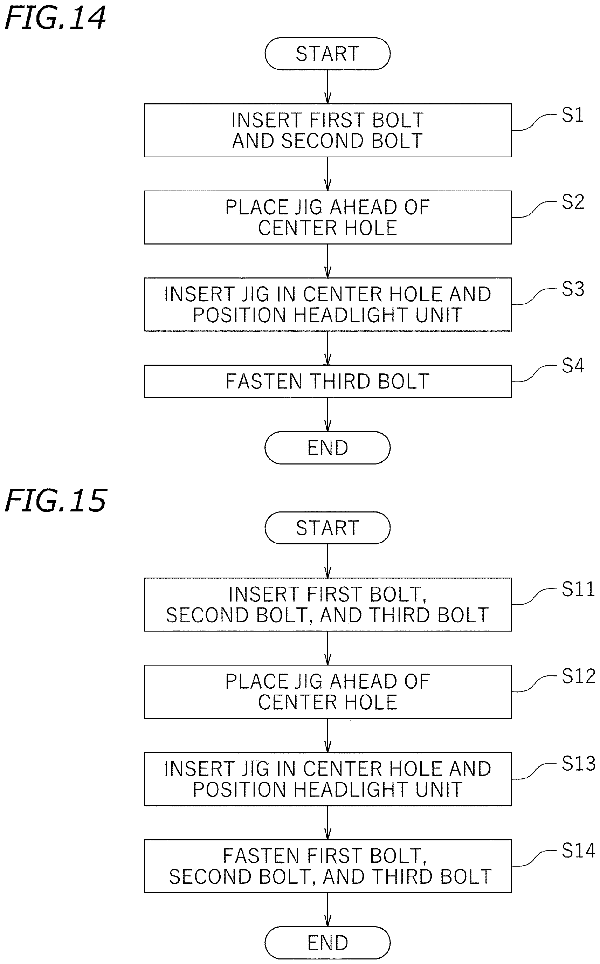

The configuration of the motorcycle 1 has been described above. In the motorcycle 1, the headlight 41 is disposed in the center hole 24 of the front cowl 21. If the position of the headlight 41 is shifted in the left-right direction with respect to the front cowl 21, this shift is conspicuous. In view of this, in this preferred embodiment, the headlight 41 is positioned by using the jig 90 (see FIG. 6) in assembling the headlight unit 40 in the stay 60. Next, with reference to the flowchart of FIG. 14, an example of a method for assembling the headlight unit 40 and the stay 60 will be described. The assembly of the headlight unit 40 and the stay 60 described later is a part of a process of fabricating the motorcycle 1. The following assembly method is included in the method for fabricating the motorcycle 1.

As described above, the headlight unit 40 is fixed to the stay 60 with the first bolt 81, the second bolt 82, and the third bolt 83. First, the headlight unit 40 is placed ahead of the stay 60. Next, the first bolt 81 is inserted in the first stay hole 71 and the first attachment hole 51 from the rear, and the first bolt 81 is tightened. The second bolt 82 is also inserted in the second stay hole 72 and the second attachment hole 52 from the rear, and the second bolt 82 is tightened.

The first bolt 81 is inserted in the first stay hole 71 elongated in the left-right direction and the first attachment hole 51 of a circular hole. The second bolt 82 is inserted in the second stay hole 72 elongated in the left-right direction and the second attachment hole 52 of a circular hole. In this preferred embodiment, the first bolt 81 and the second bolt 82 are rubber mount bolts. That is, each of the first bolt 81 and the second bolt 82 is a bolt including a shaft, and a cylindrical rubber around the shaft. The rubber of the first bolt 81 is disposed inside the first stay hole 71 and the first attachment hole 51, and the rubber of the second bolt 82 is disposed inside the second stay hole 72 and the second attachment hole 52. Thus, the headlight unit 40 is movable leftward and rightward with respect to the stay 60.

Then, as schematically illustrated in FIG. 6, the jig 90 for positioning is placed ahead of the center hole 24 (see step S2). The jig 90 includes the left insertion portion 90L configured to be inserted between the left wall 25L and the left contact surface 45L, and the right insertion portion 90R configured to be inserted between the right wall 25R and the right contact surface 45R. The shape and dimensions of the left insertion portion 90L are previously set to be suitable for the shape and dimensions of the left wall 25L and the left contact surface 45L. The shape and dimensions of the right insertion portion 90R are previously set to be suitable for the shape and dimensions of the right wall 25R and the right contact surface 45R. The left insertion portion 90L has a left surface 90LL extending rearward and rightward and a right surface 90LR extending rearward and leftward. The right insertion portion 90R has a right surface 90RR extending rearward and leftward and a left surface 90RL extending rearward and rightward.

Thereafter, the jig 90 is inserted in the center hole 24 (see step S3) . When the jig 90 is inserted in the center hole 24, the left insertion portion 90L is pushed against the left wall 25L and the left contact surface 45L, and the right insertion portion 90R is pushed against the right wall 25R and the right contact surface 45R. At this time, if the position of the headlight unit 40 is shifted in the left-right direction with respect to the front cowl 21, the headlight unit 40 is pushed by the jig 90 to the left or to the right. When the headlight unit 40 is moved to the left or to the right, the distance between the left wall 25L and the left contact surface 45L and the distance between the right wall 25R and the right contact surface 45R are adjusted to predetermined distances. Accordingly, the headlight unit 40 is positioned to a predetermined position (i.e., a position without a leftward/rightward positional shift) with respect to the front cowl 21. That is, the position of the headlight unit 40 is adjusted in the left-right direction with respect to the front cowl 21. The center 44c of the lens 44 of the headlight 41 is located on the vehicle center line CL and on the center line CWL (see FIG. 7). The position of the headlight 41 in the left-right direction is adjusted to coincide with the position of the center hole 24 in the left-right direction.

After positioning of the headlight unit 40 in the left-right direction is performed as described above, the third bolt 83 is inserted in the third stay hole 73 and the third attachment hole 53 from below, and the third bolt 83 is tightened (see step S4). That is, the headlight unit 40 is fixed to the stay 60 with the third bolt 83 such that the headlight unit 40 does not move in the left-right direction with respect to the stay 60.

In the manner described above, the headlight unit 40 and the stay 60 can be assembled without a positional shift of the headlight 41 in the left-right direction with respect to the center hole 24 of the front cowl 21. The front portion 50 including the front cowl 21, the headlight unit 40, and the stay 60 can be conveyed as one unit after being assembled. The front portion 50 is conveyed to another assembly field and the stay 60 is fixed to the head pipe 3 with the bolt 61 so that the front portion 50 can be attached as one unit to the vehicle body frame 4.

The assembly method described above is an example. The headlight unit 40 and the stay 60 may be assembled by another method. For example, as illustrated in FIG. 15, the headlight unit 40 and the stay 60 may be assembled by the following method.

In an example of the other assembly method, the headlight unit 40 is placed ahead of the stay 60. Next, the first bolt 81 is inserted in the first stay hole 71 and the first attachment hole 51 from behind, and the first bolt 81 is temporarily tightened. The second bolt 82 is inserted in the second stay hole 72 and the second attachment hole 52 from below, and the second bolt 82 is temporarily tightened. The third bolt 83 is inserted in the third stay hole 73 and the third attachment hole 53 from below, and the third bolt 83 is temporarily tightened (see step S11). The temporarily tightening means that the first bolt 81, the second bolt 82 and the third bolt 83 are loosely tightened to such a degree that the headlight unit 40 is movable with respect to the stay 60.

Thereafter, the jig 90 for positioning is placed ahead of the center hole 24 (see step S12), and the jig 90 is inserted in the center hole 24 (see step S13) . Accordingly, the headlight unit 40 is positioned to a predetermined position (i.e., a position without a leftward/rightward shift) with respect to the front cowl 21. The position of the headlight 41 in the left-right direction is adjusted to coincide with the position of the center hole 24 in the left-right direction.

After positioning of the headlight unit 40 in the left-right direction is performed, the first bolt 81, the second bolt 82, and the third bolt 83 are finally tightened (see step S14). That is, the headlight unit 40 is fixed to the stay 60 with the first bolt 81, the second bolt 82, and the third bolt 83.

With this method, the headlight unit 40 and the stay 60 can also be assembled without a positional shift of the headlight 41 in the left-right direction with respect to the center hole 24 of the front cowl 21.

In this preferred embodiment, the following advantages can be obtained.

As described above, in the motorcycle 1, the use of the jig 90 can easily eliminate or reduce the positional shift of the headlight 41 in the left-right direction with respect to the front cover 20.

In this preferred embodiment, as illustrated in FIG. 6, the left wall 25L extends rearward and rightward, and the left contact surface 45L extends rearward and leftward. The right wall 25R extends rearward and leftward, and the right contact surface 45R extends rearward and rightward. The distance between the left wall 25L and the left contact surface 45L in the left-right direction and the distance between the right wall 25R and the right contact surface 45R in the left-right direction gradually increase toward the front. Accordingly, the jig 90 can be easily inserted. The positioning of the headlight unit 40 in the left-right direction with respect to the front cover 20 can be easily performed. The positional shift of the headlight 41 in the left-right direction with respect to the center hole 24 can be easily prevented or reduced.

In this preferred embodiment, the headlight unit 40 includes the left side cover 43L at least partially disposed at the left of the headlight 41 and the right side cover 43R at least partially disposed at the right of the headlight 41. The left contact surface 45L is provided in the left side cover 43L, and the right contact surface 45R is provided in the right side cover 43R. Thus, when the jig 90 is inserted in the center hole 24, the jig 90 does not contact the headlight 41. The positioning of the headlight unit 41 in the left-right direction can be performed without contact of the jig 90 with the headlight 41.

In this preferred embodiment, the front end 43Lf of the left side cover 43L and the front end 43Rf of the right side cover 43R are located forward of the front end 44c of the headlight 41. Thus, in inserting the jig 90 in the center hole 24, the left insertion portion 90L can be quickly inserted between the left wall 25L and the left contact surface 45L, and the right insertion portion 90R can be quickly inserted between the right wall 25R and the right contact surface 45R. Accordingly, the jig 90 can be easily inserted. The positioning of the headlight unit 40 in the left-right direction can be easily performed.

In this preferred embodiment, as illustrated in FIG. 7, the center hole 24 has a symmetric shape in the left-right direction in a vehicle front view. In a case where the center hole 24 has a symmetric shape in the left-right direction, when the position of the headlight 41 is shifted in the left-right direction, this shift is conspicuous. However, since the positional shift of the headlight 41 in the left-right direction is prevented or reduced, the shape of the center hole 24 described above does not cause any problem.

In this preferred embodiment, in a vehicle front view, the upper edge 24U of the center hole 24 includes the left upper edge 24UL extending leftward and upward from the center position 24Um in the vehicle width direction in a vehicle front view, and the right upper edge 24UR extending rightward and upward from the center position 24Um in the vehicle width direction in the vehicle front view. The center hole 24 has a shape with which the center position in the vehicle width direction is noticeable. Accordingly, when the position of the headlight 41 is shifted in the left-right direction, this shift is conspicuous. However, since the positional shift of the headlight 41 in the left-right direction is prevented or reduced, the shape of the center hole 24 described above does not cause any problem.

In this preferred embodiment, as illustrated in FIG. 10, the first stay hole 71 is located at the right of and above the third stay hole 73, and the second stay hole 72 is located at the left of and above the third stay hole 73. This arrangement of the first stay hole 71, the second stay hole 72, and the third stay hole 73 enables the stay 60 to support the headlight unit 40 with stability.

In this preferred embodiment, the first stay hole 71 and the second stay hole 72 are open rearward. Thus, the first bolt 81 and the second bolt 82 are allowed to be inserted from the rear and fastened. The third stay hole 73 is open downward. Although the third stay hole 73 is disposed relatively in a lower portion, the third bolt 83 is allowed to be inserted in the third stay hole 73 from below and fastened. Thus, in fastening the first bolt 81, the second bolt 82, and the third bolt 83, an insertion path for a tool can be easily obtained. That is, a tool path can be easily obtained. Accordingly, after the positioning of the headlight unit 40 in the left-right direction is performed, the first bolt 81, the second bolt 82, and the third bolt 83 can be easily fastened.

Although one preferred embodiment has been described above, this preferred embodiment is merely an example. Other various preferred embodiments may be made.

In the preferred embodiment, the first attachment hole 51 is a circular hole, and the first stay hole 71 is an elongated hole. Alternatively, at least one of the first attachment hole 51 and the first stay hole 71 needs to be an elongated hole elongated in the left-right direction. For example, the first attachment hole 51 may be an elongated hole elongated in the left-right direction with the first stay hole 71 being a circular hole. Both of the first attachment hole 51 and the first stay hole 71 may be elongated holes elongated in the left-right direction. At least one of the second attachment hole 52 and the second stay hole 72 needs to be an elongated hole elongated in the left-right direction. At least one of the third attachment hole 53 and the third stay hole 73 needs to be an elongated hole elongated in the left-right direction.

The distance between the left wall 25L and the left contact surface 45L in the left-right direction and the distance between the right wall 25R and the right contact surface 45R in the left-right direction may not gradually increase toward the front. The left wall 25L may not extend rearward and rightward. The right wall 25R may not extend rearward and leftward. The left contact surface 45L may not extend rearward and leftward. The right contact surface 45R may not extend rearward and rightward.

The headlight unit 40 may not include one or both of the left side cover 43L and the right side cover 43R. For example, the jig 90 may be configured to be pushed against the headlight 41. In this case, the left contact surface and the right contact surface to contact the jig 90 is provided in the headlight 41.

The front end 43Lf of the left side cover 43L and the front end 43Rf of the right side cover 43R may not be located forward of the front end 44c of the headlight 41. For example, the front end 43Lf of the left side cover 43L and the front end 43Rf of the right side cover 43R may be located rearward of the front end 44c of the headlight 41.

The shape of the center hole 24 is not specifically limited. The center hole 24 may not have a symmetric shape in the left-right direction in a vehicle front view. The upper edge 24U of the center hole 24 may not include the left upper edge 24UL extending leftward and upward from the center position 24Um in the vehicle width direction and the right upper edge 24UR extending rightward and upward from the center position 24Um in the vehicle width direction.

The positional relationship among the first stay hole 71, the second stay hole 72, and the third stay hole 73 is not specifically limited. The first stay hole 71 may not be located at the right and above the third stay hole 73. The second stay hole 72 may not be located at the left and above the third stay hole 73.

The first stay hole 71 and the second stay hole 72 may not be open rearward. For example, the first stay hole 71 and the second stay hole 72 may be open upward. The third stay hole 73 may not be open downward. For example, the third stay hole 73 may be open rearward.

Each of the number of stay holes and the number of attachment holes are not limited to three. The stay 60 may have one or more stay holes in addition to the first stay hole 71, the second stay hole 72, and the third stay hole 73. The headlight unit 40 may have one or more attachment holes in addition to the first attachment hole 51, the second attachment hole 52, and the third attachment hole 53. The headlight unit 40 may be fastened to the stay 60 with one or more bolts in addition to the first bolt 81, the second bolt 82, and the third bolt 83. In this case, the additional stay holes and/or the additional attachment holes need to be elongated holes elongated in the left-right direction. The first bolt 81, the second bolt 82 and the third bolt 83 may be rubber mount bolts, or may not be rubber mount bolts.

The shape of the jig 90 described above is an example. The shape of the jig 90 is not specifically limited as long as the jig 90 has a portion to contact the left wall 25L and the right wall 25R of the front cover 20 and the left contact surface 45L and the right contact surface 45R of the headlight unit 40, and the position of the headlight unit 40 in the left-right direction can be adjusted by inserting the jig 90 into the center hole 24 from the front.

The straddled vehicle refers to a vehicle on which a passenger is astride. The straddled vehicle is not limited to the motorcycle 1. The straddled vehicle may be a motor tricycle, an all terrain vehicle (ATV), or a snowmobile, for example.

The terms and expressions used herein are used for explanation purposes and should not be construed as being restrictive. It should be appreciated that the terms and expressions used herein do not eliminate any equivalents of features illustrated and mentioned herein, but include various modifications falling within the claimed scope of the present invention. The present invention may be embodied in many different forms. The present disclosure is to be considered as providing examples of embodiments of the present invention. These examples are described herein with the understanding that such examples are not intended to limit the present invention to the preferred embodiments described herein and/or illustrated herein. Hence, the present invention is not limited to the embodiments described herein.

### DESCRIPTION OF REFERENCE CHARACTERS

1 motorcycle (straddled vehicle), 20 front cover, 21 front cowl, 24 center hole, 24U upper edge, 24UL left upper edge, 24UR right upper edge, 25L left wall, 25R right wall, 40 headlight unit, 41 headlight, 43L left side cover, 43R right side cover, 45L left contact surface, 45R right contact surface, 51 first attachment hole, 52 second attachment hole, 53 third attachment hole, 60 stay, 71 first stay hole, 72 second stay hole, 73 third stay hole, 81 first bolt, 82 second bolt, 83 third bolt, 90 jig, 90L left insertion portion, 90R right insertion portion.

## Claims

1. A straddled vehicle (1) comprising:
a front cover (20) having a center hole (24) at a center of the front cover (20) in a vehicle width direction, the center hole (24) extending rearward;
a headlight unit (40) including a headlight (41) disposed inside the center hole (24); and
a stay (60) fixed to the front cover (20), wherein
the headlight unit (40) has a first attachment hole (51), a second attachment hole (52), and a third attachment hole (53),
the stay (60) has a first stay hole (71), a second stay hole (72), and a third stay hole (73),
the straddled vehicle (1) includes
a first bolt (81) inserted in the first attachment hole (51) and the first stay hole (71) and fastening the headlight unit (40) and the stay (60) to each other,
a second bolt (82) inserted in the second attachment hole (52) and the second stay hole (72) and fastening the headlight unit (40) and the stay (60) to each other, and
a third bolt (83) inserted in the third attachment hole (53) and the third stay hole (73) and fastening the headlight unit (40) and the stay (60) to each other,
the front cover (20) includes a left wall (25L) and a right wall (25R), the left wall (25L) defining a portion of the center hole (24), the right wall (25R) defining a portion of the center hole (24) and located at the right of the left wall (25L), and
the headlight unit (40) includes a left contact surface (45L) and a right contact surface (45R);
**characterized in that**:
at least one of the first attachment hole (51) and the first stay hole (71) is an elongated hole elongated in a left-right direction,
at least one of the second attachment hole (52) and the second stay hole (72) is an elongated hole elongated in the left-right direction,
at least one of the third attachment hole (53) and the third stay hole (73) is an elongated hole elongated in the left-right direction,
the left contact surface (45L) being separated rightward from the left wall (25L) and facing the left wall (25L), the right contact surface (45R) being separated leftward from the right wall (25R) and facing the right wall (25R).

2. The straddled vehicle (1) according to claim 1, wherein
the left wall (25L) extends rearward and rightward, and the left contact surface (45L) extends rearward and leftward, and
the right wall (25R) extends rearward and leftward, and the right contact surface (45R) extends rearward and rightward.

3. The straddled vehicle (1) according to claim 1 or 2, wherein
the headlight unit (40) includes a left side cover (43L) and a right side cover (43R), the left side cover (43L) being at least partially disposed at the left of the headlight (41), the right side cover (43R) being disposed at the right of the headlight (41), and
the left contact surface (45L) is provided in the left side cover (43L), and the right contact surface (45R) is provided in the right side cover (43R).

4. The straddled vehicle (1) according to claim 3, wherein a front end (43Lf) of the left side cover (43L) and a front end (43Rf) of the right side cover (43R) are located forward of a front end (44c) of the headlight (41).

5. The straddled vehicle (1) according to any one of claims 1 to 4, wherein the center hole (24) has a symmetric shape in the left-right direction in a vehicle front view.

6. The straddled vehicle (1) according to any one of claims 1 to 5, wherein
the center hole (24) has an upper edge (24U), and
the upper edge (24U) includes a left upper edge (24UL) and a right upper edge (24UR), the left upper edge (24UL) extending leftward and upward from a center position (24Um) in the vehicle width direction in a vehicle front view, the right upper edge (24UR) extending rightward and upward from the center position (24Um) in the vehicle width direction in the vehicle front view.

7. The straddled vehicle (1) according to any one of claims 1 to 6, wherein
the first stay hole (71) is located at the right of and above the third stay hole (73), and
the second stay hole (72) is located at the left of and above the third stay hole (73).

8. The straddled vehicle (1) according to claim 7, wherein
the first stay hole (71) and the second stay hole (72) are open rearward, and
the third stay hole (73) is open downward.

9. A method for fabricating a straddled vehicle (1) as claimed in claim 1, the method comprising the steps of:
inserting the first bolt (81) in the first attachment hole (51) and the first stay hole (71), and inserting the second bolt (82) in the second attachment hole (52) and the second stay hole (72) ;
placing a jig (90) ahead of the center hole (24) of the front cover (20), the jig (90) including a left insertion portion (90L) and a right insertion portion (90R), the left insertion portion (90L) being configured to be inserted between the left wall (25L) and the left contact surface (45L), the right insertion portion (90R) being configured to be inserted between the right wall (25R) and the right contact surface (45R);
inserting the jig (90) in the center hole (24), pushing the left insertion portion (90L) against the left wall (25L) and the left contact surface (45L), and pushing the right insertion portion (90R) against the right wall (25R) and the right contact surface (45R), thereby positioning the headlight unit (40) with respect to the front cover (20) in the left-right direction; and
fixing the headlight unit (40) to the stay (60) with at least the third bolt (83).

## Patentansprüche

1. Spreizsitz-Fahrzeug (1), das umfasst:
eine vordere Verkleidung (20), die ein mittiges Loch (24) in einer Mitte der vorderen Verkleidung (20) in einer Fahrzeug-Breitenrichtung aufweist, wobei sich das mittige Loch (24) nach hinten erstreckt;
eine Scheinwerfer-Einheit (40), die einen Scheinwerfer (41) enthält, der im Inneren des mittigen Lochs (24) angeordnet ist; sowie
eine Strebe (60), die an der vorderen Verkleidung (20) befestigt ist; wobei
die Scheinwerfer-Einheit (40) ein erstes Anbringungsloch (51), ein zweites Anbringungsloch (52) sowie ein drittes Anbringungsloch (53) aufweist,
die Strebe (60) ein erstes Streben-Loch (71), ein zweites Streben-Loch (72) sowie ein drittes Streben-Loch (73) aufweist,
wobei das Spreizsitz-Fahrzeug (1) enthält:
einen ersten Bolzen (81), der in das erste Anbringungsloch (51) und das erste Streben-Loch (71) eingeführt ist und die Scheinwerfer-Einheit (40) und die Strebe (60) aneinander befestigt,
einen zweiten Bolzen (82), der in das zweite Anbringungsloch (52) und das zweite Streben-Loch (72) eingeführt ist und die Scheinwerfer-Einheit (40) und die Strebe (60) aneinander befestigt, sowie
einen dritten Bolzen (83), der in das dritte Anbringungsloch (53) und das dritte Streben-Loch (73) eingeführt ist und die Scheinwerfer-Einheit (40) und die Strebe (60) aneinander befestigt,
wobei die vordere Abdeckung (20) eine linke Wand (25L) sowie eine rechte Wand (25R) einschließt, die linke Wand (25L) einen Abschnitt des mittigen Lochs (24) bildet, die rechte Wand (25R) einen Abschnitt des mittigen Lochs (24) bildet und sich an der rechten Seite der linken Wand (25L) befindet, und
die Scheinwerfer-Einheit (40) eine linke Kontaktfläche (45L) sowie eine rechte Kontaktfläche (45R) einschließt;
**dadurch gekennzeichnet, dass:**
das erste Anbringungsloch (51) oder/und das erste Streben-Loch (71) ein Langloch ist/sind, das in einer Links-Rechts-Richtung langgestreckt ist,
das zweite Anbringungsloch (52) oder/und das zweite Streben Loch (72) ein Langloch ist/sind, das in der Links-Rechts-Richtung langgestreckt ist,
das dritte Anbringungsloch (53) oder/und das dritte Streben-Loch (73) ein Langloch ist/sind, das in der Links-Rechts-Richtung langgestreckt ist,
wobei die linke Kontaktfläche (45L) nach rechts von der linken Wand (25L) getrennt und der linken Wand (25L) zugewandt ist und die rechte Kontaktfläche (45R) nach links von der rechten Wand (25R) getrennt und der rechten Wand (25R) zugewandt ist.

2. Spreizsitz-Fahrzeug (1) nach Anspruch 1, wobei
die linke Wand (25L) sich nach hinten sowie nach rechts erstreckt, und die linke Kontaktfläche (45L) sich nach hinten sowie nach links erstreckt, und
die rechte Wand (25R) sich nach hinten sowie nach links erstreckt, und die rechte Kontaktfläche (45R) sich nach hinten sowie nach rechts erstreckt.

3. Spreizsitz-Fahrzeug (1) nach Anspruch 1 oder 2, wobei
die Scheinwerfer-Einheit (40) eine linke seitliche Verkleidung (43L) sowie eine rechte seitliche Verkleidung (43R) enthält, und die linke seitliche Verkleidung (43L) wenigstens teilweise an der linken Seite des Scheinwerfers (41) angeordnet ist, die rechte seitliche Verkleidung (43R) an der rechten Seite des Scheinwerfers (41) angeordnet ist, und
die linke Kontaktfläche (45L) an der linken seitlichen Verkleidung (43L) vorhanden ist, und die rechte Kontaktfläche (45R) an der rechten seitlichen Verkleidung (43R) vorhanden ist.

4. Spreizsitz-Fahrzeug (1) nach Anspruch 3, wobei ein vorderes Ende (43Lf) der linken seitlichen Verkleidung (43L) und ein vorderes Ende (43Rf) der rechten seitlichen Verkleidung (43R) vor einem vorderen Ende (44c) des Scheinwerfers (41) angeordnet sind.

5. Spreizsitz-Fahrzeug (1) nach einem der Ansprüche 1 bis 4, wobei das mittige Loch (24) eine symmetrische Form in der Links-Rechts-Richtung in einer Fahrzeug-Vorderansicht hat.

6. Spreizsitz-Fahrzeug (1) nach einem der Ansprüche 1 bis 5, wobei
das mittige Loch (24) einen oberen Rand (24U) aufweist und
der obere Rand (24U) einen linken oberen Rand (24UL) sowie einen rechten oberen Rand (24UR) umfasst und der linke obere Rand (24UL) sich von einer mittigen Position (24Um) in der Fahrzeug-Breitenrichtung in einer Fahrzeug-Vorderansicht nach links und nach oben erstreckt und der rechte obere Rand (24UR) sich von der mittigen Position (24Um) in der Fahrzeug-Breitenrichtung in der Fahrzeug-Vorderansicht nach rechts und nach oben erstreckt.

7. Spreizsitz-Fahrzeug (1) nach einem der Ansprüche 1 bis 6, wobei
das erste Streben-Loch (71) an der rechten Seite und oberhalb des dritten Streben-Lochs (73) angeordnet ist, und
das zweite Streben-Loch (72) an der linken Seite und oberhalb des dritten Streben-Lochs (73) angeordnet ist.

8. Spreizsitz-Fahrzeug (1) nach Anspruch 7,
wobei das erste Streben-Loch (71) und das zweite Streben-Loch (72) nach hinten offen sind, und
das dritte Streben-Loch (73) nach unten offen ist.

9. Verfahren zum Herstellen eines Spreizsitz-Fahrzeugs (1) nach Anspruch 1, wobei das Verfahren die folgenden Schritte umfasst:
Einführen des ersten Bolzens (81) in das erste Anbringungsloch (51) sowie das erste Streben-Loch (71), und Einführen des zweiten Bolzens (82) in das zweite Anbringungsloch (52) und das zweite Streben-Loch (72);
Positionieren einer Vorrichtung (90) vor dem mittigen Loch (24) der vorderen Verkleidung (20), wobei die Vorrichtung (90) einen linken Einführungsabschnitt (90L) sowie einen rechten Einführungsabschnitt (90R) enthält, der linke Einführungsabschnitt (90L) zum Einführen zwischen die linke Wand (25L) und die linke Kontaktfläche (45L) ausgeführt ist, und der rechte Einführungsabschnitt (90R) zum Einführen zwischen die rechte Wand (25R) und die rechte Kontaktfläche (45R) ausgeführt ist;
Einführen der Vorrichtung (90) in das mittige Loch (24), Drücken des linken Einführungsabschnitts (90L) an die linke Wand (25L) und die linke Kontaktfläche (45L) sowie Drücken des rechten Einführungsabschnitts (90R) an die rechte Wand (25R) und die rechte Kontaktfläche (45R), um so die Scheinwerfer-Einheit (40) in Bezug auf die vordere Verkleidung (20) in der Links-Rechts-Richtung zu positionieren; sowie
Befestigen der Scheinwerfer-Einheit (40) an der Strebe (60) wenigstens mit dem dritten Bolzen (83).

## Revendications

1. Véhicule à enfourcher (1) comprenant :
un capot avant (20) ayant un trou central (24) au centre du capot avant (20) dans une direction de largeur de véhicule, le trou central (24) s'étendant vers l'arrière ;
une unité de phare (40) comprenant un phare (41) disposé à l'intérieur du trou central (24) ; et
un support (60) fixé au capot avant (20), dans lequel
l'unité de phare (40) a un premier trou de fixation (51), un deuxième trou de fixation (52), et un troisième trou de fixation (53),
le support (60) a un premier trou de support (71), un deuxième trou de support (72), et un troisième trou de support (73),
le véhicule à enfourcher (1) comprend
un premier boulon (81) inséré dans le premier trou de fixation (51) et le premier trou de support (71) et fixant l'unité de phare (40) et le support (60) l'un à l'autre,
un deuxième boulon (82) inséré dans le deuxième trou de fixation (52) et le deuxième trou de support (72) et fixant l'unité de phare (40) et le support (60) l'un à l'autre, et
un troisième boulon (83) inséré dans le troisième trou de fixation (53) et le troisième trou de support (73) et fixant l'unité de phare (40) et le support (60) l'un à l'autre,
le capot avant (20) comprend une paroi gauche (25L) et une paroi droite (25R), la paroi gauche (25L) définissant une partie du trou central (24), la paroi droite (25R) définissant une partie du trou central (24) et est située à droite de la paroi gauche (25L), et
l'unité de phare (40) comprend une surface de contact gauche (45L) et une surface de contact droite (45R) ;
**caractérisé en ce que** :
au moins l'un parmi le premier trou de fixation (51) et le premier trou de support (71) est un trou allongé allongé dans une direction gauche-droite,
au moins l'un parmi le deuxième trou de fixation (52) et le deuxième trou de support (72) est un trou allongé allongé dans la direction gauche-droite,
au moins l'un parmi le troisième trou de fixation (53) et le troisième trou de support (73) est un trou allongé allongé dans la direction gauche-droite,
la surface de contact gauche (45L) étant séparée vers la droite de la paroi gauche (25L) et faisant face à la paroi gauche (25L), la surface de contact droite (45R) étant séparée vers la gauche de la paroi droite (25R) et faisant face à la paroi droite (25R).

2. Véhicule à enfourcher (1) selon la revendication 1, dans lequel
la paroi gauche (25L) s'étend vers l'arrière et vers la droite, et la surface de contact gauche (45L) s'étend vers l'arrière et vers la gauche, et
la paroi droite (25R) s'étend vers l'arrière et vers la gauche, et la surface de contact droite (45R) s'étend vers l'arrière et vers la droite.

3. Véhicule à enfourcher (1) selon la revendication 1 ou 2, dans lequel
l'unité de phare (40) comprend un capot latéral gauche (43L) et un capot latéral droit (43R), le capot latéral gauche (43L) étant au moins partiellement disposé à gauche du phare (41), le capot latéral droit (43R) étant disposé à droite du phare (41), et
la surface de contact gauche (45L) est prévue dans le capot latéral gauche (43L), et la surface de contact droite (45R) est prévue dans le capot latéral droit (43R).

4. Véhicule à enfourcher (1) selon la revendication 3, dans lequel une extrémité avant (43Lf) du capot latéral gauche (43L) et une extrémité avant (43Rf) du capot latéral droit (43R) sont situées en avant d'une extrémité avant (44c) du phare (41).

5. Véhicule à enfourcher (1) selon l'une quelconque des revendications 1 à 4, dans lequel le trou central (24) a une forme symétrique dans la direction gauche-droite sur une vue de face du véhicule.

6. Véhicule à enfourcher (1) selon l'une quelconque des revendications 1 à 5, dans lequel
le trou central (24) a un bord supérieur (24U), et
le bord supérieur (24U) comprend un bord supérieur gauche (24UL) et un bord supérieur droit (24UR), le bord supérieur gauche (24UL) s'étendant vers la gauche et vers le haut par rapport à une position centrale (24Um) dans la direction de largeur de véhicule sur une vue de face du véhicule, le bord supérieur droit (24UR) s'étendant vers la droite et vers le haut par rapport à la position centrale (24Um) dans la direction de largeur de véhicule sur la vue de face du véhicule.

7. Véhicule à enfourcher (1) selon l'une quelconque des revendications 1 à 6, dans lequel
le premier trou de support (71) est situé à droite et au-dessus du troisième trou de support (73), et
le deuxième trou de support (72) est situé à gauche et au-dessus du troisième trou de support (73).

8. Véhicule à enfourcher (1) selon la revendication 7, dans lequel
le premier trou de support (71) et le deuxième trou de support (72) sont ouverts vers l'arrière, et
le troisième trou de support (73) est ouvert vers le bas.

9. Procédé de fabrication d'un véhicule à enfourcher (1) selon la revendication 1, le procédé comprenant les étapes consistant à :
insérer le premier boulon (81) dans le premier trou de fixation (51) et le premier trou de support (71), et insérer le deuxième boulon (82) dans le deuxième trou de fixation (52) et le deuxième trou de support (72) ;
placer un gabarit (90) devant le trou central (24) du capot avant (20), le gabarit (90) comprenant une partie d'insertion gauche (90L) et une partie d'insertion droite (90R), la partie d'insertion gauche (90L) étant configurée pour être insérée entre la paroi gauche (25L) et la surface de contact gauche (45L), la partie d'insertion droite (90R) étant configurée pour être insérée entre la paroi droite (25R) et la surface de contact droite (45R) ;
insérer le gabarit (90) dans le trou central (24), en poussant la partie d'insertion gauche (90L) contre la paroi gauche (25L) et la surface de contact gauche (45L), et en poussant la partie d'insertion droite (90R) contre la paroi droite (25R) et la surface de contact droite (45R), en positionnant ainsi l'unité de phare (40) par rapport au capot avant (20) dans la direction gauche-droite ; et
fixer l'unité de phare (40) au support (60) avec au moins le troisième boulon (83).
